# EUROPEAN PATENT SPECIFICATION

(11) **EP 0 351 442 B1**
(45) Date of publication and mention of the grant of the patent: **24.11.1993**
(21) Application number: 88111745.1
(22) Date of filing: 21.07.1988
(51) Int. Cl.: F16L 19/00

(54) **An improved structure for pipe fittings**
Rohrfitting
Raccord de robinetterie

(43) Date of publication of application: 24.01.1990
(73) Proprietor: Hwang, Biing-Yih, Kaohsiung Hsien Taiwan (TW)
(72) Inventor: Hwang, Biing-Yih, Kaohsiung Hsien Taiwan (TW)
(74) Representative: LOUIS, PÖHLAU, LOHRENTZ & SEGETH

(56) References cited:
- CH-A- 198 478
- DE-A- 1 923 301
- DE-C- 748 859
- FR-A- 1 192 883

## Description

The invention relates to a system for connecting pipes together comprising:
a pipe fitting having at least two passage components, each passage component being provided with a passage hole therethrough and including (a) a distal female-threaded, cylindrical portion, (b) an intermediate cylindrical portion ending in a first blocking edge and
(c) a proximal cylindrical portion ending in a second blocking edge, said first blocking edge having a smaller diameter than said female-threaded portion and said second blocking edge having a smaller diameter than said first blocking edge and the pipe such that the pipe is inserted past said first blocking edge;
a plurality of anti-leak gaskets which are sized to fit around the pipe and inside of said intermediate cylindrical portion, an innermost one of said gaskets abutting said first blocking edge;
a metal ring which is sized to fit around the pipe and inside of said intermediate cylindrical portion and which abuts an outermost one of said gaskets; and
a male-threaded ring sized to be threaded into said distal female-threaded portion and around the pipe, said male-threaded ring including notches which are provided for the reception of a turning tool whereby said male-threaded ring is threadable into said female-threaded portion so as to force said gaskets to expand between the pipe and said intermediate cylindrical portion.

Such a system which is known from CH-A 198 478 improves the structure of pipe fittings for quickly connecting metal pipes without the necessity of cutting male threads on them. In this known system the pipe does not abut said second blocking edge but is at an arbitrary distance therefrom. Thus the procedure for mounting or inserting the pipe within the pipe fitting is not exactly defined. Especially the sealing characteristics between the pipe and the pipe fitting are sensitive to the tightening of the gaskets. Furthermore, since the male-threaded ring of this known system still projects from the distal female-threaded portion of the pipe fitting it will leak if the ring is unintentionally loosened.

Accordingly it is an object of the present invention to improve the sealing characteristics of the known system for connecting pipes together, in order to avoid the above drawbacks .

The system is characterized in that the pipe directly abuts saids second blocking edge, that the male threaded ring is received completely within said distal female-threaded portion of the pipe fitting, and that said notches are provided in the distal circumferential end surface of the male-threaded ring.

The pipe fitting according to the invention is equipped with passage holes cut with a female thread and is provided with first blocking and second blocking edges. Said female thread co-operates with a male-threaded ring; the first blocking edge serves as an abutment for several anti-leak gaskets and the second blocking edge with the smallest diameter serves to block the end of a pipe when said pipe is inserted in the passage hole. Besides, there is a metal ring placed between said male-threaded ring and said gaskets for pressing said gaskets to expand them between the pipe and the fitting body keeping both of them tightly united when said male-threaded ring is tightly screwed into said female thread.

Figure 1 is an exploded perspective view of the first example with the improved structure for pipe fittings in this invention.

Figure 2 is a cross-sectional view of the first example with this improved structure for pipe fittings in this invention.

Figure 3 is a cross-sectional view of the second example with this improved structure for pipe fittings in this invention.

Figure 4 is an top view of the male-threaded ring in this invention.

Figure 5 is a cross-sectional view of 5-5 line on figure 4.

Figure 6 is a top view of the metal ring in this invention.

Figure 7 is a cross-sectional view of 7-7 line on figure 6.

Figure 8 is a cross-sectional view of the first example united with a pipe.

Figure 9 is a cross-sectional view of the second example united with a pipe.

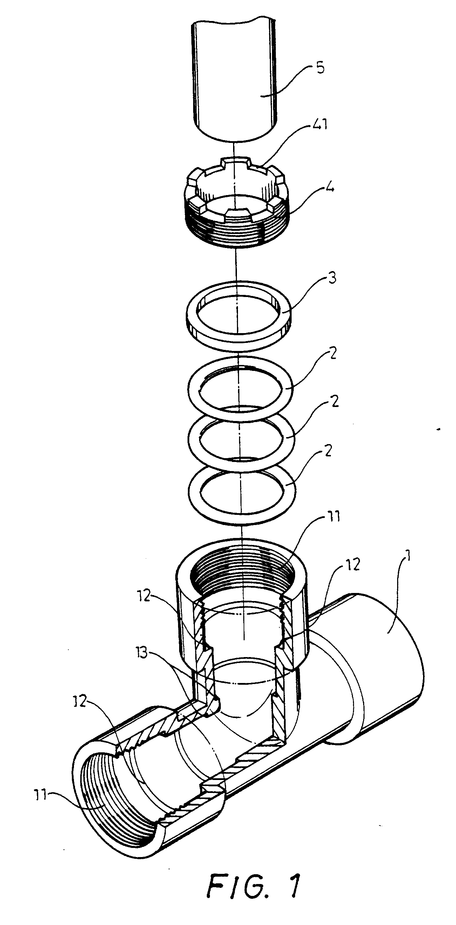

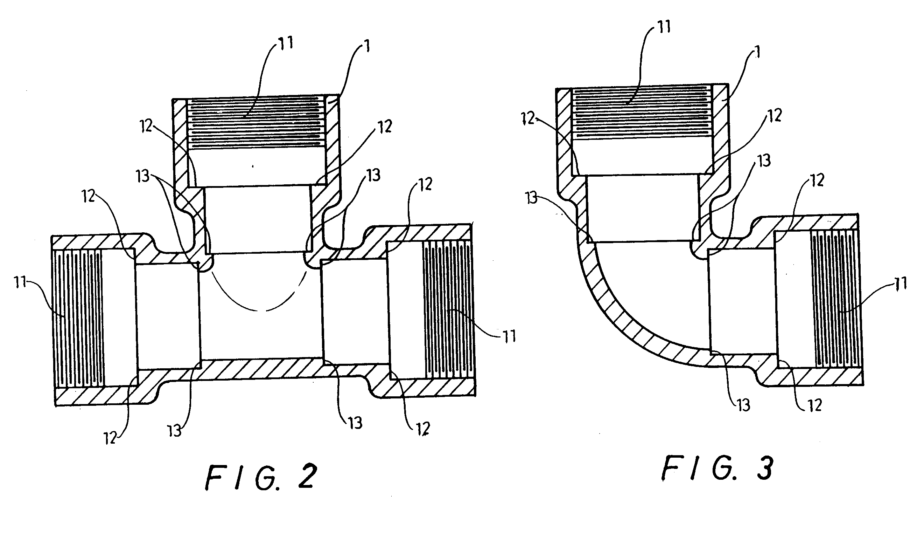

First, a pipe fitting having this improved structure shown in figures 1, 2 and 3 is the first example in this invention, a tee fitting. Its body 1 has three passage holes for liquid which are provided separately with female thread 11, first blocking edge 12 and second blocking edge 13; female thread 11 is located at the most outer part with a larger diameter than the two blocking edges 12 and 13 and the diameter of second blocking edge 13 is smaller than that of first blocking edge 12.

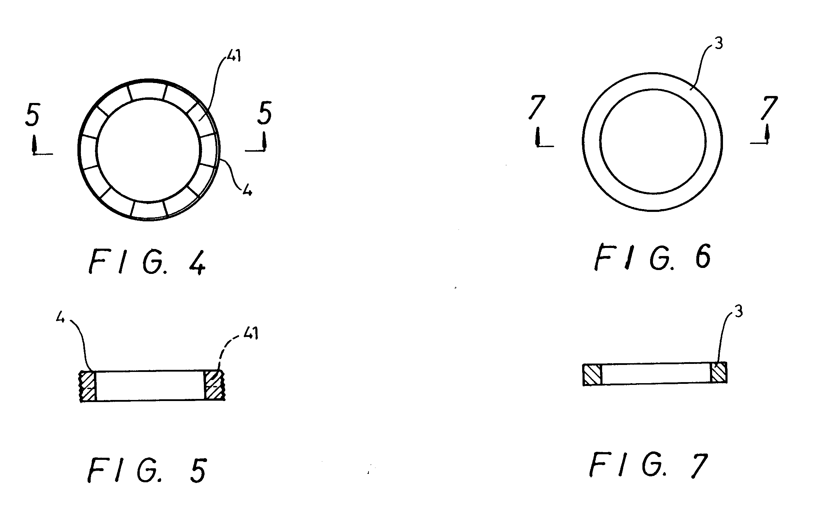

Anti-leak gaskets 2 shown in figure 1 are made of elastic rubber, and their inner diameter is sized to accept the outer diameter of a pipe 5. Metal ring 3, as shown in figures 6 and 7, is to be put rather than several anti-leak gaskets 2, and its flat surface can push evenly anti-leak gaskets 2.

Male-threaded ring 4 shown in figures 4 and 5 is provided with a male thread for uniting with any passage hole 11 of body 1, and with notches 41 on the flat circumferential surface for a turning tool to be inserted therein so as to turn the ring 4.

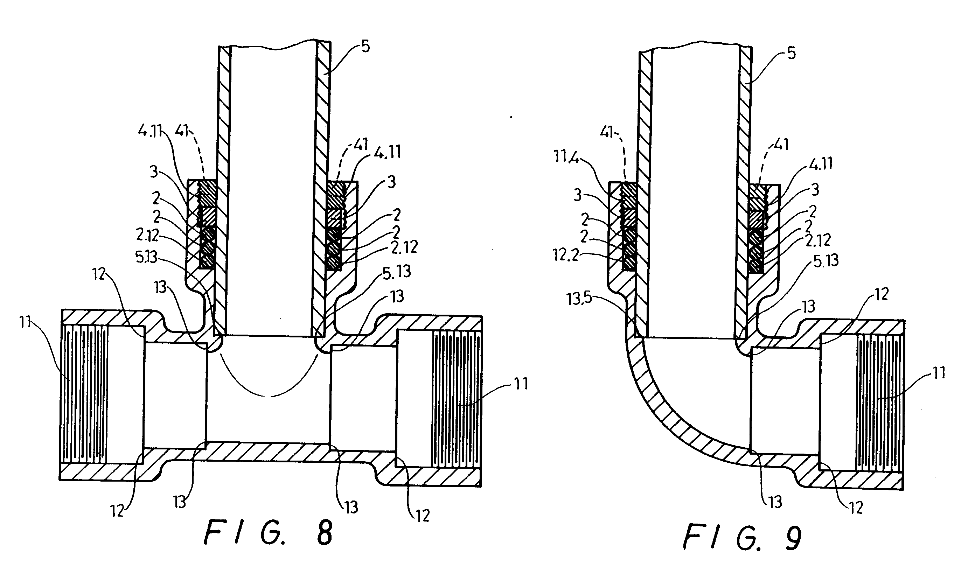

As figures 8 and 9 show, when a metal pipe 5 is to be united with body 1, anti-leak gaskets 2, metal ring 3 and male-threaded ring 4 are orderly inserted around the outer surface of the pipe; the metal pipe should be inserted in the passage hole with its end abutting the second blocking edge 13; several anti-leak gaskets 2 should be placed into the unthreaded part of the hole with the most inner flat surface abutting the first blocking edge 12; then screwing tightly male-threaded ring 4 in female thread 11 of body 1 can press metal ring 3, which itself presses anti-leak gaskets 2 to expand toward the inner and the outer diameter so that there is no leakage between the pipe and the pipe fitting.

After a pipe fitting has been united with a metal pipe and buried in a building, the necessity for disassembling them hardly occurs, so anti-leak gaskets 2 never wear out nor let the liquid running in the pipe leak out because said gaskets never have to turn around. Besides, male-threaded ring 4 never has in turning any contact or friction with anti-leak gaskets owing to their location at the unthreaded part of the passage hole, which can never cause any leakage.

## Claims

1. A system for connecting pipes together comprising:
a pipe fitting (1) having at least two passage components, each passage component being provided with a passage hole therethrough and including (a) a distal female-threaded, cylindrical portion (11), (b) an intermediate cylindrical portion ending in a first blocking edge (12) and (c) a proximal cylindrical portion ending in a second blocking edge (13), said first blocking edge (12) having a smaller diameter than said female-threaded portion (11) and said second blocking edge (13) having a smaller diameter than said first blocking edge (12) and the pipe (5) such that the pipe (5) is inserted past said first blocking edge (12);
a plurality of anti-leak gaskets (2) which are sized to fit around the pipe (5) and inside of said intermediate cylindrical portion, an innermost one of said gaskets (2) abutting said first blocking edge (12);
a metal ring (3) which is sized to fit around the pipe (5) and inside of said intermediate cylindrical portion and which abuts an outermost one of said gaskets (2); and
a male-threaded ring (4) sized to be threaded into said distal female-threaded portion (11) and around the pipe, said male-threaded ring (4) including notches (41) which are provided for the reception of a turning tool whereby said male-threaded ring (4) is threadable into said female-threaded portion (11) so as to force said gaskets (2) to expand between the pipe (5) and said intermediate cylindrical portion,
characterized in that the pipe (5) directly abuts said second blocking edge (13), that the male-threaded ring (4) is received completely within said distal female-threaded portion (11) of the pipe fitting (1), and that said notches (41) are provided in the distal circumferential end surface of the male-threaded ring (4).

## Patentansprüche

1. Ein System zur Verbindung von Rohren miteinander, das umfaßt:
ein Rohrfitting (1) mit wenigstens zwei Durchflußteilen, wobei jedes Durchflußteil mit einer Durchgangsöffnung durch dieses versehen ist und (a) einen distalen zylindrischen Innengewindeabschnitt (11), (b) einen zwischenliegenden Zylinderabschnitt, der in einem ersten Anschlagrand (12) endet, sowie (c) einen proximalen Zylinderabschnitt, der in einem zweiten Anschlagrand (13) endet, enthält, der genannte erste Anschlagrand (12) einen kleineren Durchmesser als der erwähnte Innengewindeabschnitt (11) hat und der genannte zweite Anschlagrand (13) einen kleineren Durchmesser als der genannte erste Anschlagrand (12) sowie das Rohr (5) hat derart, daß das Rohr (5) an dem genannten ersten Anschlagrand (12) vorbei eingesetzt wird;
eine Mehrzahl von Leckschutzdichtungen (2), die so bemessen sind, daß sie um das Rohr (5) herum und in das Innere des erwähnten zwischenliegenden Zylinderabschnitts passen, wobei eine innerste der besagten Leckschutzdichtungen (2) an den genannten ersten Anschlagrand (12) anstößt;
einen Metallring (3), der so bemessen ist, daß er rund um das Rohr (5) und in das Innere des erwähnten zwischenliegenden Zylinderabschnitts paßt, und der an eine äußerste der besagten Leckschutzdichtungen (2) anstößt; und
einen Außengewindering (4), der so bemessen ist, daß er in den genannten distalen Innengewindeabschnitt (11) und um das Rohr (5) herum einzuschrauben ist, wobei dieser Außengewindering (4) Kerben (41) besitzt, die für die Aufnahme eines Drehwerkzeugs vorgesehen sind, wodurch der genannte Außengewindering (4) in den erwähnten Innengewindeabschnitt (11) einschraubbar ist, um die besagten Dichtungen (2) zwangsweise zu einem Ausdehnen zwischen dem Rohr (5) und dem erwähnten zwischenliegenden Zylinderabschnitt zu bringen,
dadurch gekennzeichnet, daß das Rohr (5) unmittelbar gegen den genannten zweiten Anschlagrand (13) anstößt, daß der Außengewindering (4) gänzlich innerhalb des genannten Innengewindeabschnitts (11) des Rohrfittings (1) aufgenommen ist und daß die erwähnten Kerben (41) in der distalen, in Umfangsrichtung verlaufenden Stirnfläche des Außengewinderinges (4) vorgesehen sind.

## Revendications

1. Système de raccordement de tuyaux comprenant :
un raccord (1) de tuyaux comportant au moins deux passages possibles, chacun étant traversé par un trou de passage et comprenant (a) une portion cylindrique (11) distale avec un filetage intérieur, (b) une portion cylindrique intermédiaire se terminant par un premier épaulement (12) de blocage, et (c) une portion cylindrique proximale s'achevant en un second épaulement (13) de blocage, ledit premier épaulement (12) ayant un diamètre inférieur à celui de la portion filetée (11), et le second épaulement (13) ayant à son tour un diamètre inférieur à celui du premier (12), le tuyau (5) étant inséré au-delà du premier épaulement de blocage (12);
une pluralité de joints (2) d'étanchéité qui sont dimensionnés pour s'ajuster autour du tuyau (5) et à l'intérieur de la portion cylindrique intermédiaire, dont l'un situé la plus à l'intérieur est au contact dudit premier épaulement (12);
un anneau de métal (3) qui est dimensionné pour s'ajuster autour du tuyau (5) et à l'intérieur de ladite portion cylindrique intermédiaire, en contact avec le joint d'étanchéité (2) le plus à l'extérieur ; et un anneau (4) avec un filetage externe dimensionné pour pouvoir être vissé dans la portion distale (11) filetée et autour du tuyau, ledit anneau (4) comportant des encoches (41) destinées à coopérer avec un outil tournant prévu pour visser l'anneau (4) dans la portion (11) de manière que le serrage provoque une expansion desdits joints (2) entre le tuyau (5) et ladite portion intermédiaire ;
caractérisé en ce que le tuyau (5) vient directement au contact du second épaulement de blocage (13), en ce que l'anneau (4) à filetage externe est complètement noyé dans la portion (11) distale filetée du raccord de tuyaux (1), et en ce que lesdites encoches (41) sont pratiquées dans l'extrémité circonférentielle distale dudit anneau (4).
